# EUROPEAN PATENT SPECIFICATION

(11) **EP 0 652 468 B1**
(45) Date of publication and mention of the grant of the patent: **11.04.2001**
(21) Application number: 94116887.4
(22) Date of filing: 26.10.1994
(51) Int. Cl.: G03B 27/58, G03D 13/00, B65H 23/02

(54) **Method of changing the guide width in a photo-processing apparatus and mechanism therefor**
Verfahren zur Änderung der Breite der Führung in einem photographischen Laborgerät und Vorrichtung zu diesem Zweck
Méthode de changement de largeur de guide dans un appareil de traitement photographique et dispositif utilisé à cet effet

(30) Priority: 10.11.1993 JP 28135093
(43) Date of publication of application: 10.05.1995
(73) Proprietor: Noritsu Koki Co., Ltd., Wakayama-shi, Wakayama-ken 640-8550 (JP)
(72) Inventor: Narukami, Shinji, c/o Noritsu Koki Co., Ltd., Wakayama-shi, Wakayama-ken (JP)
(74) Representative: DIEHL GLAESER HILTL & PARTNER

(56) References cited:
- DE-A- 3 538 048
- GB-A- 2 236 387
- US-A- 3 834 643
- US-A- 4 243 314
- US-A- 4 903 064
- PATENT ABSTRACTS OF JAPAN vol. 6, no. 65 (M-124) 24 April 1982 & JP-A-57 004 843 (RICOH CO LTD) 11 January 1982
- PATENT ABSTRACTS OF JAPAN vol. 6, no. 252 (P-161) 10 December 1982 & JP-A-57 148 203 (CANON KK) 13 September 1982

## Description

The present invention relates to a method of automatically changing a guide width and a mechanism therefor and, more particularly, to a method and a mechanism for automatically changing the width of a guide so that a photosensitive material can be guided properly with respect to its width direction in a conveyance course of photosensitive materials in a photo-processing apparatus.

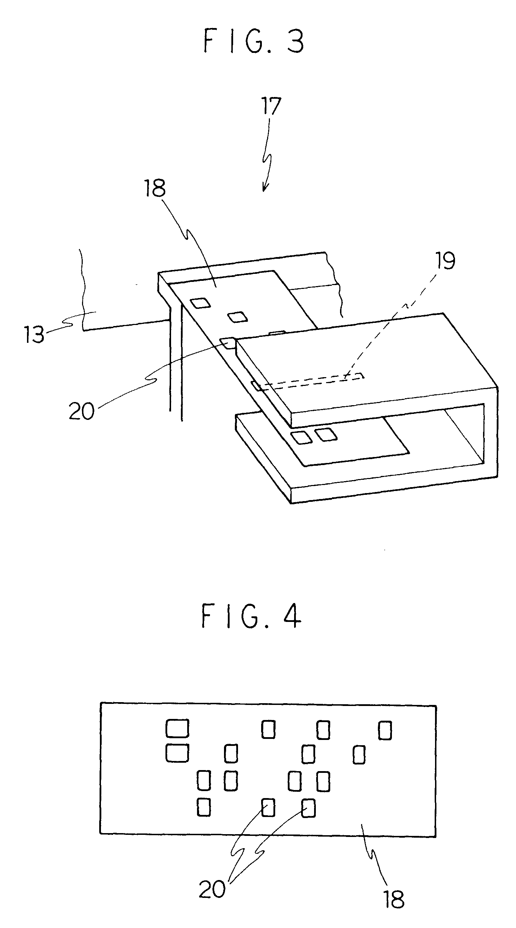

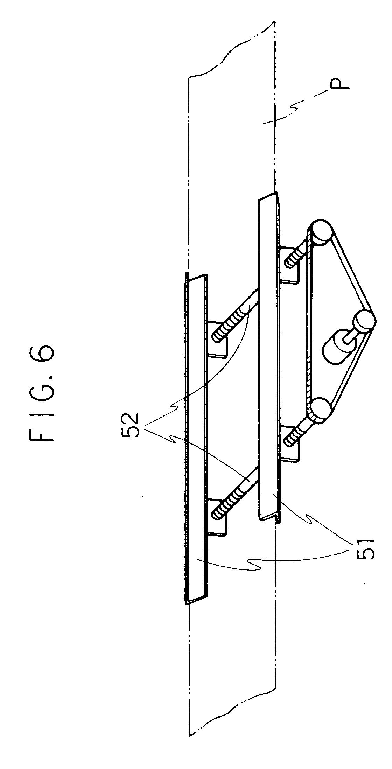

The conventional width guide, as shown in Fig. 6 for example, comprises a pair of V-shaped members 51 guiding both side edges of a photosensitive material P and screw shafts 52. The distance between the members 51 is adjusted by turning the grew shafts 52 to move both or one of the V-shaped members. A similar width guide is described in US-A-4,903,064 (cf: Fig. 3). It is also known to use a rack and pinion (not illustrated) for moving the V-shaped members.

The width of the width guide is fitted to the width of a photosensitive material to be treated by turning the screw shaft of the width guide or the pinion with a operator's hand, or a motor and the like.

In the concrete, the width of a width guide is adjusted by inserting a photosensitive material to be treated into a first width guide, looking at a clearance between the width guide and an edge of the photosensitive material and moving the width guide by a manual or electromotive operation.

DE 3 538 048 A1 describes a method for changing the width of a guide depending on the true width of the photosensitive material to be processed in a photo-processing apparatus, whereby the guide is adjusted manually or by sensoring the real width of the paper. The guide has to be adjusted manually or automatically until it is set to the proper width. This results in slow performance and it takes a long time until the guide is set up for photographic papers of a different size.

Another means for adjusting the width of a guide is disclosed in US-A-4,243,314, where the width of a guide is adjusted manually or by a stepper motor. For changing the width of the guide it is necessary to operate the stepper-motor by performing the corresponding number of steps. This also results in slow performance.

It takes, however, a long time and requires complicated operations to adjust each width guide one by one according to a photosensitive material every time the photosensitive material is changed, since many width guides are provided in a photo-processing apparatus along a conveyance course of photosensitive material.

Thus, there has been employed a simple method wherein the width of a width guide for every nominal size of a photosensitive material (e.g. 89 mm, 127 mm) is predetermined and the width guide is automatically moved to the directed position by directing the nominal size of the photosensitive material to be treated.

Recently, in addition to the increase in the numbers of sizes of photosensitive materials, there are some differences in the true widths thereof depending upon the manufacturers, even if they are of the same nominal size.

Therefore, according to the above conventional method, since the width of a width guide corresponds to the nominal size only one to one, a photosensitive material cannot be conveyed because of the deviation from the width guide when the real width of the photosensitive material is narrower than the predetermined guide width, while the photosensitive material cannot be conveyed because of the catching by the width guide when the real width of the photosensitive material is wider than the predetermined guide width.

In that case, since a guide board adapted to a width of a photosensitive material to be treated must be prepared and exchanged one by one. This increases the operating costs of the apparatus sharply.

It is an object of the present invention to solve the above problems and to provide a method and a mechanism for automatically changing the width of a width guide depending upon photosensitive materials which differ from each other in the true width even though they have the same nominal size.

In accordance with the present invention, there is provided a method for automatically changing the width of a guide (hereinafter referred to as "guide width change method") for rolled photosensitive materials in a photo-processing apparatus suitable for processing photosensitive materials of a plurality of nominal widths,
comprising the steps of
- providing a guide comprising a pair of parallel movable members,
- memorising a plurality of standard guide member widths one by one corresponding to each- of a plurality of nominal widths of photosensitive materials and a plurality of guide members removal distances for each nominal width,
- automatically driving the guide members to a standard width corresponding to the nominal width of the actual photosensitive material to be processed in the apparatus,
- automatically detecting the standard width of the guide members corresponding to said nominal width,
- automatically correcting the width of the guide members by extending and/or reducing it by a guide members removal distance relative to the detected standard guide members width depending on the actual width of said actual photosensitive material, so that a proper guide members widths is reached for guiding the actual photosensitive material in said guide.

On the other hand, in accordance with the present invention, there is also provided a mechanism for automatically changing the width of a guide (hereinafter referred to as "guide width change mechanism") for rolled photosensitive materials to be used in a photo-processing apparatus, depending on the width of the photosensitive materials comprising:
- a guide comprising a pair of parallel movable members,
- memory means for storing a plurality of standard guide member widths one by one corresponding to each of a plurality of nominal widths of the photosensitive materials to be processed in the apparatus and a plurality of guide members removal distances for each nominal width,
- a driving means for moving the guide members in the width direction of the photosensitive materials to be used in the apparatus,
characterised by
- a detecting means for automatically detecting standard widths of the width guide members, and an indication means for automatically indicating to the driving means a standard width of the guide members to be reached, said width corresponding to a nominal width of the actual photosensitive material to be used in the apparatus and for further automatically indicating to the driving means the necessary guide members removal distance from said standard width, depending on the actual width of said actual photosensitive material, so that a proper guide members width is reached for guiding the actual photosensitive material in said guide.

According to the guide width change method of the present invention, even if a next photosensitive material to be treated is of the same nominal size of the previous one but the true widths of the both are different from each other, the width guide can be changed to the correct width by directing the width of the next photosensitive material to be treated (e.g. directing a nominal size and a symbol of a maker's name).

In addition, according to the guide width change mechanism of the present invention, by directing the width of a photoensitive material to be treated, the driving means of the width guide receives an indication of a standard position corresponding to the nominal size and of the necessary removal distance from the standard position, and moves the width guide to a correct position.
Fig. 1 is a schematic representation of a photo-processing apparatus to which a guide width change mechanism of the present invention is applied;
Fig. 2 is a perspective view showing an embodiment of a guide width change mechanism of the present invention;
Fig. 3 is an enlarged perspective view of a principal part of Fig. 2;
Fig. 4 is a plan view showing an example of the detection board in Fig. 2;
Figs. 5a to 5d are schematic representations showing the movement of the guide width change mechanism of Fig. 2; and
Fig. 6 is a perspective view showing an example of a conventional width guide.

A guide width change mechanism according to the present invention will now be described in detail with reference to the drawings.

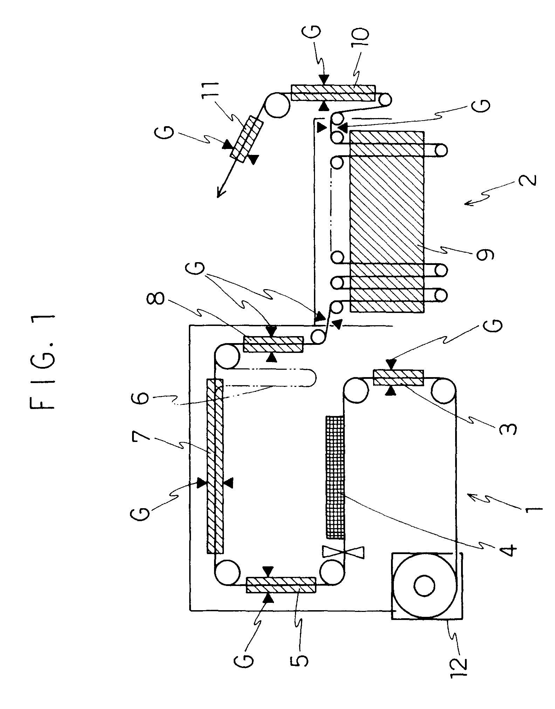

Referring to Fig. 1, a photo-processing apparatus comprises a printing part 1 for subjecting a photosensitive material (hereinafter referred to as "paper") to an exposure and a processing part 2 for the treatment of developing the exposed paper and so on.

The printing part 1 includes along a conveyance course of the paper a loading part 3 to convey the paper to an exposing table, an advancing part 5 to convey the paper precisely in a constant length, a paper conveying part 7 capable of forming a loop 6 for adjusting the progress of the paper to be conveyed to the processing part 2 and an outlet part 8.

The processing part 2 includes a processor rack part 9 in a processing tank for color development, bleach and fixing stabilization, a drier part 10 in a drying chamber for drying the paper and a cutter part 11 adjacent an outlet 11 respectively.

Width guides G to guide both side edges of the paper are generally disposed to each blocks 3, 4, 5, 7, 8, 9 , 10, 11. Numeral 12 is a rack for a paper magazine.

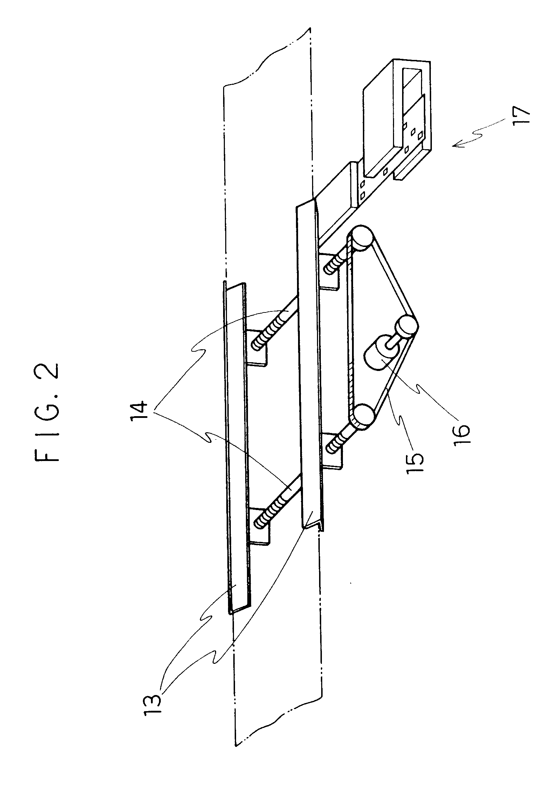

Referring to Fig. 2, the width guide G comprises a pair of guide members 13, screw shafts 14 connecting the guide members and a pulse motor 16 rotating the screw shafts 14 through a belt 15 to enlarge or reduce the distance between the guide members 13.

The width guide G is provided with a guide position detecting part (hereinafter referred to as "detecting part") 17. The detecting part 17 comprises a detecting board 18 fixed to the guide member 13 and a position sensor 19 for detecting marks on the detecting board 18.

As shown in Fig. 3, the detecting board 18 is provided with the corresponding marks i.e. detecting holes 20 for every nominal size. A photo interrupter, phototransistor or the like can also be used as a position sensor 19. The position sensor 19 receives an indication which is given by setting a paper magazine to a magazine rack 12 in the photo-processing apparatus or inputting a nominal size of a paper directly into a central processing unit in the photo-processing apparatus through a keyboard, and then the pulse motor 16 moves the guide member 13 until the position sensor 19 detects a detecting hole 20 on the detecting board 18 corresponding to a relevant nominal size. When the detecting hole 20 to be aimed is detected, the pulse motor for moving the guide member 13 stops rotating to force the guide member 13 to halt at a position forming a predetermined width.

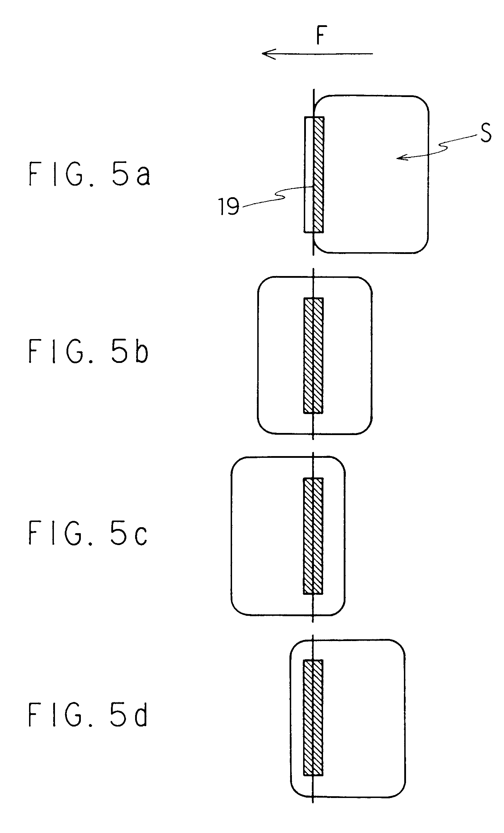

In addition to the above-mentioned function, the present embodiment also fulfills the following functions. That is, more than two kinds of guide positions of the width guide G corresponding to the same nominal size can be set as shown in Fig. 5.

Firstly, supposing that a particular nominal size of a paper is S, since the widths of papers slightly differ from each other among makers even for the same S, these widths are set to, for example, three kinds of widths N, A and B. Secondly, the first starting position of a detecting hole S on a detecting board is determined to a standard position of the guide member for an input nominal size S (Fig. 5a). An arrow F in the figure shows the direction of the guide member to enlarge the guide width.

Thirdly, a guide position for a paper with a width of N (hereinafter referred to as "N paper") is set to, for example, S+10 (Fig. 5b) and is stored in a memory in the photo-processing apparatus. In the the present specification, +10 pulses means the pulse number of the pulse motor in the direction to enlarge the width. A guide position for N paper is determined by measuring the guide width of the guide member at a standard position when the detecting part detects a detecting hole and then converting the difference from the necessary guide width of the N paper to a pulse number of the pulse motor to correct the guide position. Alternatively it is determined by, in a first step, setting a temporal correct pulse number from a standard position and then moving the width guide to the temporary position, and in a second step measuring the guide width when the width guide is at the temporary position and then correcting again he temporary correct pulse number by the difference from the necessary guide width of the N paper. In the above second step, correction of the position might be carried out by passing the N paper between the guide members.

The guide position of the N paper determined as aforesaid is set fixedly, and in the same manner as stated above guide positions for the A paper and the B paper are settled respectively of N+4 pulses (Fig. 5c) and N-3 pulses (Fig. 5d) for example.

Accordingly, when a paper magazine is set to a magazine rack, or a pair of S and N, S and A or S and B is appointed by an operator's input, the guide member moves to the standard position and then slows down to move only a distance of +10 pulses, +14 pulses or +7 pulses thereby reaching a proper guide position.

Further, the guide position for a pair of S and N, S and A or S and B having been memorized once is also traced by the width guide with reproducibility for a paper which would be set again.

In the above embodiment, though a standard position (Fig. 5a) is settled apart from that of each paper (N, A, B), a guide position of some paper (for example N) might be set as a standard position, and then a removal distance from the standard position to A might be settled of +4 pulses and that to B might be settled of -3 pulses. The kinds of widths in the same nominal size are not necessarily limited to the above 3 kinds (N, A, B), and therefore might be 2 or more than 3.

As for nominal sizes exept S, a plurality of kinds of widths can be settled in the same manner as mentioned above.

In Fig. 5a-d, though a standard position of the width guide is set to the left edge of a detecting hole in the figure, every position in the detecting hole can be adopted as a standard position. It is, however, preferable to adopt an edge because of the simplicity of setting.

The guide width change method and the guide width change mechanism of the present invention can change the guide width thereof so as to properly guide not only papers of different nominal sizes but also papers which differ from each other in the true width in spite of the same nominal size, and therefore can optionally set a plurality kinds of guide positions for papers of the same nominal size.

## Claims

1. Method of automatically changing the width of a guide (13) for rolled photosensitive materials (p) in a photo-processing apparatus (11, 12) suitable for processing photosensitive materials of a plurality of nominal widths, comprising the step of :
- providing a guide comprising a pair of parallel movable members (13),
characterized by the steps of:
- memorising a plurality of standard guide member widths one by one corresponding to each of a plurality of nominal widths of photosensitive materials (p) and a plurality of guide members removal distances for each nominal width,
- automatically driving the guide members to a standard width corresponding to the nominal width of the actual photosensitive material to be processed in the apparatus,
- automatically detecting the standard width of the guide members corresponding to said nominal width,
- automatically correcting the width of the guide members by extending and/or reducing it by a guide members removal distance relative to the detected standard guide members width depending on the actual width of said actual photosensitive material (p), so that a proper guide members width is reached for guiding the actual photosensitive material in said guide.

2. Mechanism for automatically changing the width of a guide (13) for a rolled photosensitive material (p) to be used in a photo-processing apparatus (1,2) depending on the width of the photosensitive materials comprising:
- a guide comprising a pair of parallel movable members (13),
characterised by
- memory means for storing a plurality of standard guide member widths one by one corresponding to each of a plurality of nominal widths of the photosensitive materials to be processed in the apparatus and a plurality of guide members removal distances for each nominal width,
- a driving means (14) for moving the guide members (13) in the width direction of the photosensitive material (p) to be used in the apparatus,
- a detecting means (17) for automatically detecting standard widths of the width guide (13) members, and an indication means (19) for automatically indicating to the driving means (14) a standard width of the guide members (13) to be reached, said width corresponding to a nominal width of the actual photosensitive material (p) to be used in the apparatus and for further automatically indicating to the driving means (14) the necessary guide members removal distance from said standard width, depending on the actual width of said actual photosensitive material, so that a proper guide members width is reached for guiding the actual photosensitive material in said guide.

## Patentansprüche

1. Verfahren zum automatischen Ändern der Breite einer Führung (13) für aufgewickelte lichtempfindliche Materialien (p) in einer fotographischen Bearbeitungsvorrichtung (11, 12), die für das Bearbeiten von lichtempfindlichen Materialien mit einer Mehrzahl von Nennbreiten geeignet ist, mit der Verfahrensstufe
- des Bereitstellens einer Führung mit einem Paar paralleler beweglicher Elemente (13),
gekennzeichnet durch
- das Speichern einer Mehrzahl von Führungselement-Standardbreiten einer nach der anderen entsprechend jeder Nennbreite einer Mehrzahl von Nennbreiten von lichtempfindlichen Materialien (p) und das Speichern einer Mehrzahl von Führungselement-Rückstelldistanzen für jede Nennbreite,
- das automatische Antreiben der Führungselemente bis zu einer Standardbreite, die der Nennbreite des aktuellen, in der Vorrichtung zu bearbeitenden lichtempfindlichen Materials entsprechen,
- das automatische Auffinden der Standardbreite der Führungselemente, die der genannten Nennbreite entsprechen,
- das automatische Korrigieren der Breite der Führungselemente durch Erweitern und/oder Vermindern derselben mittels einer Führungselement-Rückstelldistanz relativ zu den aufgefundenen Standardbreiten der Führungselemente in Abhängigkeit von der aktuellen Breite des genannten aktuellen lichtempfindlichen Materials (p), so daß eine geeignete Führungselementbreite zum Führen des aktuellen lichtempfindlichen Materials in der genannten Führung erreicht wird.

2. Mechanismus zum automatischen Ändern der Breite einer Führung (13) für ein aufgewickeltes lichtempfindliches Material (p), das in einer fotographischen Bearbeitungsvorrichtung (1, 2) verwendet werden soll, in Abhängigkeit von der Breite des lichtempfindlichen Materials, enthaltend
- eine Führung mit einem Paar paralleler beweglicher Elemente (13),
gekennzeichnet durch
- einen Speicher zum Speichern einer Mehrzahl von Führungselement-Standardbreiten einer nach der anderen entsprechend jeder Nennbreite einer Mehrzahl von Nennbreiten des in der Vorrichtung zu bearbeitenden lichtempfindlichen Materials und zum Speichern einer Mehrzahl von Führungselement-Rückstelldistanzen für jede Nennbreite,
- eine Antriebsvorrichtung (14) zum Bewegen der Führungselemente (13) in der Richtung der Breite des in der Vorrichtung zu verwendenden lichtempfindlichen Materials (p),
- eine Erkennungsvorrichtung (17) zum automatischen Erkennen von Standardbreiten der Breitenführungselemente (13) und eine Anzeigevorrichtung (19) zum automatischen Anzeigen einer Standardbreite des zu erreichenden Führungselement (13) gegenüber der Antriebsvorrichtung (14), wobei die genannte Breite der Nennbreite des aktuellen, in der Vorrichtung zu benutzenden lichtempfindlichen Materials (p) entspricht, und ferner zum automatischen Anzeigen der erforderlichen Führungselement-Rückstelldistanz von der Standardbreite gegenüber der Antriebsvorrichtung (14), in Abhängigkeit von der aktuellen Breite des aktuellen lichtempfindlichen Materials, so daß eine geeignete Führungselementbreite zum Führen des aktuellen lichtempfindlichen Materials in der genannten Führung erreicht wird.

## Revendications

1. Procédé de changement automatique de la largeur d'un guide (13) de matériaux photosensibles enroulés (p) dans un appareil de traitement photographique (11, 12) convenant au traitement de matériaux photosensibles de plusieurs largeurs nominales, comprenant l'étape suivante :
la disposition d'un guide qui comprend deux organes parallèles mobiles (13), et
caractérisé par les étapes suivantes :
la mémorisation de plusieurs largeurs de référence d'organe de guidage, une à une, afin qu'elles correspondent à chacune de plusieurs largeurs nominales de matériaux photosensibles (p) et plusieurs distances de décalage d'organe de guidage pour chaque largeur nominale,
l'entraînement automatique des organes de guidage vers une largeur de référence correspondant à la largeur nominale du matériau photosensible réel à traiter dans l'appareil,
la détection automatique de la largeur de référence des organes de guidage correspondant à la largeur nominale, et
la correction automatique de la largeur des organes de guidage par augmentation et/ou réduction de celle-ci d'une distance de décalage des organes de guidage par rapport_aux organes de guidage de référence détectés, d'après la largeur réelle du matériau photosensible réel (p), afin qu'une largeur convenable des organes de guidage soit atteinte pour le guidage des matériaux photosensibles réels dans le guide.

2. Mécanisme de changement automatique de la largeur d'un guide (13) d'un matériau photosensible enroulé (p) destiné à être utilisé dans un appareil (1, 2) de traitement photographique en fonction de la largeur de matériau photosensible comprenant :
un guide qui comporte deux organes parallèles mobiles (13), et
caractérisé par
un dispositif de mémoire destiné à conserver plusieurs largeurs de référence d'organes de guidage, une à une, correspondant à chacune de plusieurs largeurs nominales des matériaux photosensibles à traiter dans l'appareil, et plusieurs distances de décalage des organes de guidage pour chaque largeur nominale,
un dispositif d'entraînement (14) destiné à déplacer les organes de guidage (13) dans la direction de la largeur du matériau photosensible (p) destiné à être utilisé dans l'appareil, et
un dispositif de détection (17) destiné à détecter automatiquement les largeurs de référence des organes (13) de guidage en largeur, et un dispositif d'indication (19) destiné à indiquer automatiquement au dispositif d'entraînement (14) une largeur de référence des organes de guidage (13) qui doit être atteinte, la largeur correspondant à la largeur nominale du matériau photosensible réel (p) qui doit être utilisé dans l'appareil, et à indiquer en outre automatiquement au dispositif d'entraînement (14) la distance nécessaire de décalage des organes de guidage par rapport à la largeur de référence, d'après la largeur réelle du matériau photosensible réel, si bien qu'une largeur convenable des organes de guidage est atteinte pour le guidage du matériau photosensible réel par le guide.
